# EUROPEAN PATENT SPECIFICATION

(11) **EP 3 915 758 B1**
(45) Date of publication and mention of the grant of the patent: **22.01.2025**
(21) Application number: 19917405.3
(22) Date of filing: 28.11.2019
(51) Int. Cl.: B29C 48/66, B29C 48/68, B29C 48/685, B29B 7/42

(54) **SCREW AND PIN-TYPE EXTRUDER**
SCHNECKE UND STIFTEXTRUDER
VIS ET EXTRUDEUSE À BROCHES

(30) Priority: 25.02.2019 JP 2019031491
(43) Date of publication of application: 01.12.2021
(73) Proprietor: Nakata Engineering Co., Ltd., Kobe-shi, Hyogo 651-2312 (JP)
(72) Inventor: SATO, Tadasuke, Hyogo 651-2312 (JP); TAKEDA, Noriyuki, Hyogo 651-2312 (JP); NODA, Makoto, Hyogo 651-2312 (JP)
(74) Representative: Manitz Finsterwald Patent- und Rechtsanwaltspartnerschaft mbB
(86) International application number: PCT/JP2019/046526
(87) International publication number: WO 2020/174793

(56) References cited:
- WO-A1-2015/131526
- CN-A- 103 087 349
- JP-A- 2004 114 602
- JP-A- 2004 237 715
- JP-A- H07 314 529
- JP-A- S5 067 867
- JP-A- S5 780 037
- US-A- 4 356 140

## Description

The present invention relates to a screw and a pin-type extruder for extruding a plastic elastomer while kneading.

### Background Art

For example, Patent Document 1 below discloses a pin-type extruder which includes a screw arranged in the barrel and a plurality of pins protruding from the inner peripheral surface of the barrel toward the screw.

### Citation List

### Patent Literature

Patent Document 1: Japanese Unexamined Patent Application Publication H02-137908

A screw with a spiral blade for extruding a plastic elastomer having the features of the preamble of claim 1 is known from WO 2015/131526 A1 and CN 103 087 349 A. Related technology is described in US 4 356 140 A and JP 2004 114602 A.

### Summary of Invention

### Technical Problem

In this pin-type extruder, the elastomer kneaded between the screw and the barrel is further sheared and mixed by the pins. Thus, excellent mixing and dispersing effect can be exerted.

Unfortunately, in the case of such a pin-type extruder, there has been a problem that the elastomer extruded from the discharge port expands greatly after extruding depending on the composition of the elastomer, and the shape is not stable.

The present invention has been made in view of the above circumstance, and has a major object to provide a screw and an extruder capable of stabilizing the shape of plastic elastomers after extrusion by reducing expansion coefficient thereof.

### Solution to Problem

The present invention includes a screw with a spiral blade for extruding a plastic elastomer while kneading the plastic elastomer, the screw including, a kneading region where the spiral blade is provided with cutout portions being configured to pass pins, and a plasticizing region being arranged on a downstream side in an extrusion direction of the kneading region, wherein the plasticizing region comprises a barrier extending between portions adjacently in the extrusion direction of the spiral blade.

In the present invention, it is preferable that the plasticizing region includes three to six barriers.

In the present invention, the barrier has a height smaller than a height of the spiral blade and a difference (D) between the heights is equal to or less than 4 mm.

In the present invention, the barrier has a thickness (t) equal to or more than 1.5 times of the difference (D) of the heights.

In the present invention, it is preferable that a feed region is arranged on an upstream side in the extrusion direction of the kneading region, wherein the spiral blade of the feed region is formed into a single thread.

In the present invention, it is preferable that the spiral blade of the kneading region and the plasticizing region is formed into a double thread.

The present invention includes an extruder comprising a screw as set forth above and a barrel in which the screw is disposed, wherein the barrel comprises a plurality of pins that passes the cutout portions of the spiral blade of the kneading promoting region.

In the present invention, it is preferable that the barrel further includes an inlet for introducing the elastomer, wherein the inlet supplies the elastomer to a feed region that is located on an upstream side in the extrusion direction of the kneading region.

### Advantageous Effects of Invention

The screw according to the present invention includes a kneading region in which cutout portions for passing pins are formed in the spiral blade, and a plasticizing region being arranged on a downstream side in the extrusion direction of the kneading region, wherein the plasticizing region has a barrier extending between portions adjacently in the extrusion direction of the spiral blade.

The kneading region, as with a pin-type extruder, can knead and shear the elastomer between the screw and the barrel by pins passing through the cutout portions. Moreover, in the kneading region, the resistance between the barrel and the elastomer increases, and thus the kneading effect also increases, resulting in enhancing mixing and dispersion effect.

Further, in the plasticizing region, the elastomer that passes between the adjacent portions of the spiral blade flows downstream while overcoming the barrier. After overcoming, the elastomer deforms into a thin film. At that time, the elastomer deforms in the shearing direction and the pulling direction, and the molecules are cut uniformly and finely. In this way, in the plasticizing region, the effect of cutting elastomer molecules is highly exhibited. Thus, the expansion coefficient of the elastomer after extrusion can be reduced, and the shape thereof can be stabilized.

In addition, in the plasticizing region, when the elastomer is deformed into a thin film, the elastomer itself generates heat and warming effect is improved. As a result, the mixing and dispersion of additives are promoted in combination with the cutting effect of the molecule. Thus, it can contribute to the improvement of surface properties such as smoothing the surface properties of the extruded elastomer.

### Brief Description of Drawings

FIG. 1 is a side view of an extruder according to one embodiment of the present invention;
FIG. 2 is a side view of a screw shown in FIG. 1;
FIG. 3A is a cross sectional view of a kneading region of the extruder;
FIG. 3B is a cross-sectional view taken along the lines I-I of FIG. 3A;
FIG. 4A is a cross-sectional view of a plasticizing region of the extruder; and
FIG. 4B is conceptual view showing effect of barriers.

### Description of Embodiments

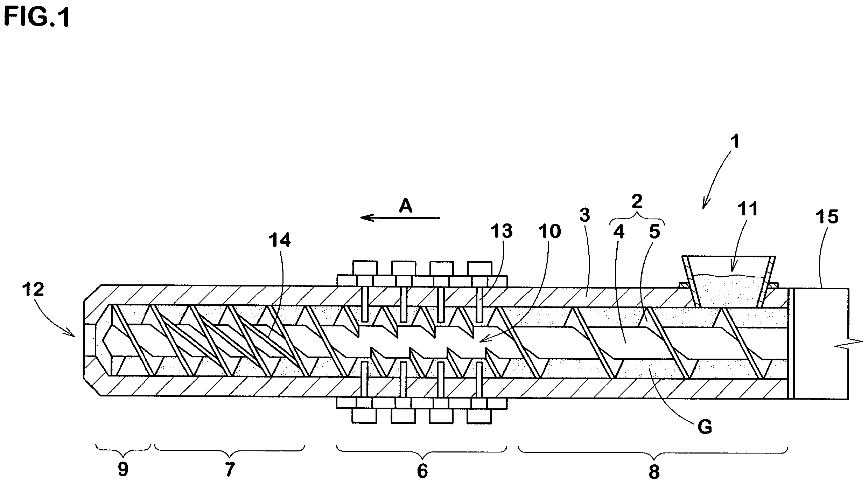

Hereinafter, an embodiment of the present invention will be explained below with reference to the accompanying drawings. FIG. 1 is a side view of an extruder 1 according to an embodiment of the invention. As illustrated in FIG. 1, the extruder 1 according to the present embodiment of the invention includes a screw 2 for extruding a plastic elastomer G while kneading the same in an extrusion direction A, and a barrel 3 in which the screw 2 is disposed. Here, as the plastic elastomer G, for example, unvulcanized rubber, thermoplastic elastomer, etc. can be applied.

The screw 2 includes a screw main shaft 4 and a spiral blade 5 that protrudes outwardly in the radial direction of the screw 2 from the screw main shaft 4. The spiral blade 5 is for extruding the elastomer G while kneading the same, and is formed as a single thread, a double thread screw, or a multi thread.

Here, a single thread has an aspect in which one spiral blade 5 is provided at an axial region of the screw main shaft 4. Further, a double thread has an aspect in which the screw main shaft 4 has two spiral blades 5 in an axial region. Furthermore, a multi thread has an aspect in which the screw main shaft 4 has two or more spiral blades 5 in an axial region. A double thread is one aspect of a multi thread.

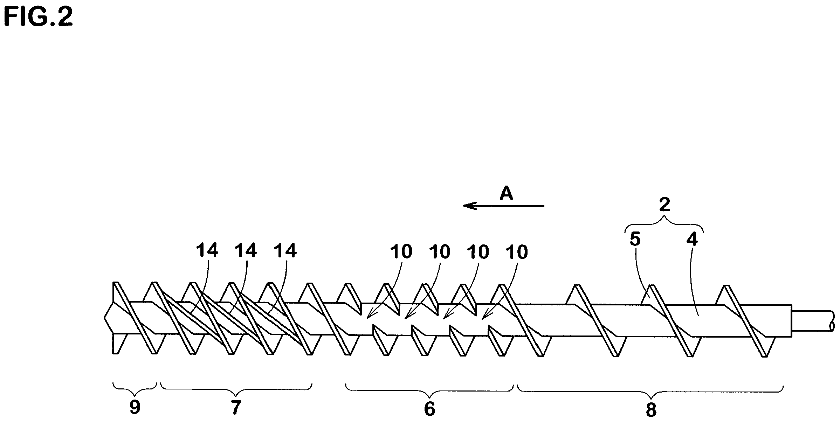

FIG. 2 is a side view of the screw 2 shown in FIG. 1. As illustrated in FIG. 1 and FIG. 2, the screw 2 includes a kneading region 6, and a plasticizing region 7 arranged on a downstream side in the extrusion direction A of the kneading region 6. A feed region 8 is further arranged on the upstream side in the extrusion direction A of the kneading region 6.

In the screw 2, the spiral blade 5 of the feed region 8 is preferably formed into a single thread. Further, the spiral blade 5 of the kneading region 6 and the plasticizing region 7 is preferably formed into a multi thread, especially a double thread.

In the kneading region 6, cutout portions 10 for passing pins are formed in the spiral blade 5. In the present embodiment of the invention, four cutout portions 10 are provided on the spiral blade 5. The number of the cutout portions 10 is not limited to this, but can be modified appropriately depending on the type of elastomer G.

Such a kneading region 6 can shear the elastomer G between the screw 2 and the barrel 3 by the spiral blade 5 and pins 10 passing through the cutout portions 10. Moreover, in the kneading region 6, the resistance between the barrel 3 and the elastomer G increases, and thus the kneading effect also increases, resulting in enhancing mixing and dispersion effect.

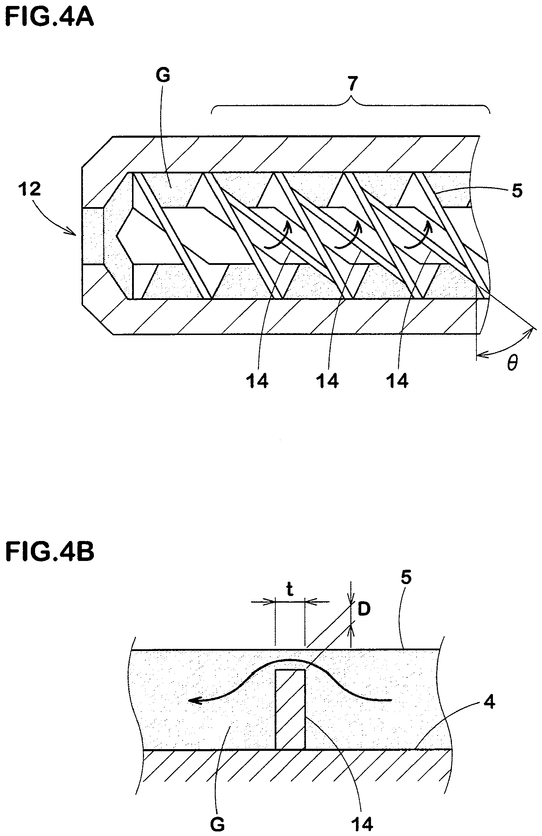

As illustrated in FIG. 4A, the plasticizing region 7 includes one or more barriers 14 extending between portions adjacently in the extrusion direction A of the spiral blade 5. A height of the barriers 14 is smaller than a height of the spiral blade 5. Thus, as conceptually illustrated in FIG. 4B, the elastomer G overcomes the barriers 14 and flows downstream of the extrusion direction A while deforming into a thin film. Upon this thin film deformation, the elastomer G deforms in the shearing direction and the pulling direction, and the molecules are cut uniformly and finely. That is, in the plasticizing region 7, the effect of cutting the molecule of the elastomer G is highly exhibited. Thus, the expansion coefficient of the elastomer G after extrusion can be reduced, and the stabilization of the shape after extrusion is possible.

In addition, in the plasticizing region 7, when the elastomer G is deformed into a thin film, the elastomer itself generates heat and warming effect is improved. As a result, the mixing and dispersion of additives are promoted in combination with the cutting effect of the molecule. Thus, it can contribute to the improvement of surface properties such as smoothing the surface properties of the extruded elastomer.

The difference D between the height of the barriers 14 and the height of the spiral blade 5 is equal to or less than 4 mm. When the difference D of the heights exceeds 4 mm, deformation to a thin film is insufficient and the effect of cutting molecules may be reduced. Thus, it is more preferable that the upper limit of the difference D of the heights is 3 mm or less. The lower limit of the difference D of the heights is preferably equal to or more than 1 mm. When it is less than 1 mm, the flow is hindered and the discharge amount of the elastomer G decreases.

In order to enhance the cutting effect of the molecule, a thickness t of the barriers 14 is 1.5 times or more of the difference D of the heights. If the thickness t is less than 1.5 times of the difference D of the heights, deformation of molecule of the elastomer G in the tensile direction becomes insufficient when passing over the barriers 14, which tends to reduce the cutting effect. The upper limit of the thickness t is preferably equal to or less than 10.0 times of the difference D of the heights. If it exceeds 10.0 times, the flow is hindered and the discharge amount of the elastomer G decreases.

The number of the barriers 14 formed in the plasticizing region 7 is preferably in a range of three to six from the viewpoint of the effect of reducing the expansion coefficient and the reduction of the discharge amount. A lead angle θ of the barriers 14 is not specified and can be set appropriately in a range of 0 to 90 degrees.

Note that if the kneading region 6 is not present, the elastomer G will be difficult to overcome the barriers 14 having the difference D of the heights being 4 mm or less, which will be difficult to obtain a sufficient effect of reducing the expansion coefficient. In addition, the discharge amount is greatly reduced. That is, the synergistic action of the kneading region 6 and the plasticizing region 7 makes it possible to sufficiently obtain the effect of reducing the expansion coefficient without causing a large decrease in the discharge amount.

Next, in the extruder 1 of the present embodiment of the invention, a more preferred embodiment of the invention for reducing the expansion coefficient of the elastomer G after extrusion is described. As illustrated in FIG. 1, the barrel 3, for example, is formed into a substantially cylindrical shape with a substantially constant inner diameter. The barrel 3 includes an inlet 11 for introducing the elastomer G and a discharge port 12 for discharging kneaded the elastomer G.

The inlet 11 is located in the feed region 8, and the elastomer G is supplied from the inlet 11 into the feed region 8. In this feed region 8, since the spiral blade 5 is formed into a single thread, it exhibits excellent biting property with respect to the supplied elastomer G. This may ensure that the elastomer G is not overflowed from the inlet 11 and is surely sent into the barrel 3.

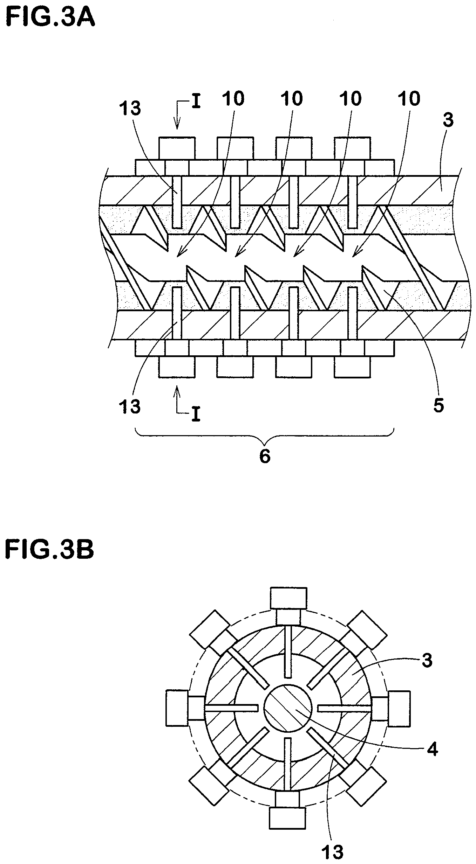

As illustrated in FIGS. 3A and 3B, the barrel 3 includes a plurality of pins 13 which can pass through the cutout portions 10 provided in the spiral blade 5 of the kneading region 6. As illustrates in FIG. 3B, it is preferable that the barrel 3 includes a plurality of pins 13 (e.g., four to eight) that passes through each cutout portion 10 of the spiral blade 5. Also, in the barrel 3, it is preferable that the pins 13 are arranged in multiple rows (e.g., three to five rows) in the extrusion direction A. Such pins 13 can shear the elastomer G kneaded between the screw 2 and the barrel 3. In addition, the pins 13 increase resistance between the barrel 3 and the elastomer G, which can enhance kneading effect and mixing and dispersing effect. It is preferable that a protruding amount of the pins 13 into the barrel 3 can be modified as appropriate.

As illustrates in FIG. 1, it is preferable that the screw 2 is rotated in one direction by a drive unit 15 arranged on the upstream side of the extrusion direction A of the barrel 3. The rotation speed of the screw 2 can be adjusted as appropriate by the drive unit 15. Such a screw 2 can easily change the rotation speed according to the operating conditions of the extruder 1.

It is preferable that the screw 2 has an extrusion region 9 in which the spiral blade 5 is formed into a double threaded on the downstream side of the extrusion direction A of the plasticizing region 7. In this way, the extrusion region 9 can stably discharge the elastomer G from the discharge port 12 of the barrel 3.

While the particularly preferable embodiments in accordance with the present invention have been described in detail, the present invention is not limited to the illustrated embodiments, but can be modified within the scope of the appended claims.

### Examples

In order to confirm the effect of the present invention, extruders having the structure shown in FIG. 1 and having a Gervey die at the front end was constructed. Then, the extruders were operated at the same rotation speed and the same temperature conditions with each other. The coefficient of expansion, plasticity, surface properties of the extruded material, and discharge amount of the elastomer G after extrusion were measured and compared with the conventional and comparative examples. As a conventional example, a pin extruder was used.

As the elastomer, 50 parts by weight of carbon black and 5 parts by weight of oil were mixed with 100 parts by weight of natural rubber.

### <Coefficient of expansion>

It was evaluated by the ratio Sb / Sa (unit%) of the cross-sectional area Sa of the discharge port of the Gervey die and the cross-sectional area Sb of the product extruded from the discharge port after 60 minutes. The smaller the value, the better the stability of the shape is.

### <Plasticity>

According to JIS K6300, Mooney viscosity (1+4) at 130 deg. C was measured and shown as an index with the conventional example as 100. The smaller the value, the better the plasticity is.

### <Surface property>

The surface roughness (arithmetic mean roughness Ra) of the molded product extruded from the discharge port was measured. The smaller the value, the smoother the surface is.

### <Discharge amount>

The extruder is operated under the temperature limit of 120 deg. C, and the discharge amount at that time is shown by an index with the conventional example as 100. The larger the value, the better the discharge amount is.

**[Table 1]**

| | Conventional example | comparative example | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Kneading region | presence | None | presence | presence | presence | presence | presence | presence | presence | presence | presence | presence |
| Plasticizing region | None | presence | presence | presence | presence | presence | presence | presence | presence | presence | presence | presence |
| Number of barriers | - | 2 | 2 | 3 | 4 | 4 | 4 | 4 | 4 | 4 | 4 | 6 |
| Difference D of heights (mm) | - | 2 | 2 | 2 | 2 | 4.5 | 4 | 3 | 3 | 3 | 3 | 3 |
| Thickness of barriers t/D | - | 3 | 3 | 3 | 3 | 5 | 5 | 1 | 1.5 | 5 | 10 | 5 |
| Coefficient of expansion (%) | 349 | 342 | 334 | 327 | 270 | 330 | 300 | 320 | 300 | 253 | 248 | 231 |
| Plasticity (index) | 100 | 99 | 97 | 94 | 83 | 95 | 90 | 95 | 90 | 81 | 80 | 78 |
| Surface property (arithmetic mean roughness Ra) | 30 to 44 | 32 to 41 | 31 to 45 | 29 to 40 | 22 to 28 | 31 to 44 | 31 to 44 | 30 to 43 | 30 to 43 | 20 to 25 | 20 to 26 | 20 to 27 |
| Discharge amount (index) | 100 | 52 | 95 | 90 | 85 | 130 | 120 | 120 | 120 | 109 | 98 | 80 |

As shown in Table 1, in the examples, it can be confirmed that the coefficient of expansion of the elastomer after extrusion is low and the shape stability is excellent. It can also be confirmed that a large decrease in the discharge amount can be suppressed.

### Reference Signs List

1 extruder
2 screw
3 barrel
5 spiral blade
6 kneading region
7 plasticizing region
8 feed region
10 cutout portion
11 inlet
13 pin
14 barrier
A extrusion direction
G elastomer

## Claims

1. A screw (2) for a pin-type extruder with a spiral blade (5) for extruding a plastic elastomer while kneading the plastic elastomer (G), the screw (2) comprising:
a kneading region (6) where the spiral blade (5) is provided with cutout portions (10) being configured to pass pins (13); and
a plasticizing region (7) being arranged on a downstream side in an extrusion direction (A) of the kneading region (6),
wherein
the plasticizing region (7) comprises a barrier (14) extending between portions adjacently in the extrusion direction (A) of the spiral blade (5),
**characterized in that**
the barrier (14) has a height smaller than a height of the spiral blade (5) and a difference (D) between the heights is equal to or less than 4 mm, and
the barrier has a thickness (t) equal to or more than 1.5 times of the difference (D) of the heights.

2. The screw (2) according to claim 1, wherein
the plasticizing region (7) comprises three to six barriers (14).

3. The screw (2) according to claim 1 or 2, further comprising
a feed region (8) arranged on an upstream side in the extrusion direction (A) of the kneading region (6), wherein the spiral blade (5) of the feed region (8) is formed into a single thread.

4. The screw (2) according to claim 3, wherein
the spiral blade (5) of the kneading region (6) and the plasticizing region (7) is formed into a double thread.

5. An extruder (1) comprising a screw as set forth in any one of claims 1 to 4 and a barrel (3) in which the screw (2) is disposed, wherein
the barrel (3) comprises a plurality of pins (13) that passes through the cutout portions (10) of the spiral blade (5) of the kneading promoting region.

6. The extruder (1) according to claim 5, the barrel (3) further comprising an inlet (11) for introducing the elastomer (G), wherein
the inlet (11) supplies the elastomer (G) to a feed region (8) that is located on an upstream side in the extrusion direction (A) of the kneading region (6).

## Patentansprüche

1. Schnecke (2) für einen Extruder vom Stifttyp mit einer Spiralschaufel (5) zum Extrudieren eines Kunststoffelastomers, während das Kunststoffelastomer (G) geknetet wird, wobei die Schnecke (2) umfasst:
einen Knetbereich (6), wo die Spiralschaufel (5) mit ausgeschnittenen Abschnitten (10) versehen ist, die so konfiguriert sind, dass sie Stifte (13) passieren; und
einen Plastifizierungsbereich (7), der auf einer stromabwärtigen Seite in einer Extrusionsrichtung (A) des Knetbereichs (6) angeordnet ist,
wobei der Plastifizierungsbereich (7) eine Barriere (14) umfasst, die sich zwischen Abschnitten erstreckt, die in der Extrusionsrichtung (A) der Spiralschaufel (5) benachbart sind,
**dadurch gekennzeichnet, dass**
die Barriere (14) eine Höhe aufweist, die kleiner als eine Höhe der Spiralschaufel (5) ist, und eine Differenz (D) zwischen den Höhen gleich oder kleiner als 4 mm ist, und
die Barriere eine Dicke (t) aufweist, die gleich oder größer als das 1,5-fache der Differenz (D) der Höhen ist.

2. Schnecke (2) nach Anspruch 1, wobei
der Plastifizierungsbereich (7) drei bis sechs Barrieren (14) umfasst.

3. Schnecke (2) nach Anspruch 1 oder 2, ferner umfassend
einen Zuführbereich (8), der auf einer stromaufwärtigen Seite in der Extrusionsrichtung (A) des Knetbereichs (6) angeordnet ist, wobei die Spiralschaufel (5) des Zuführbereichs (8) zu einem einzelnen Gewinde geformt ist.

4. Schnecke (2) nach Anspruch 3, wobei
die Spiralschaufel (5) des Knetbereichs (6) und der Plastifizierungsbereich (7) zu einem Doppelgewinde geformt sind.

5. Extruder (1), umfassend eine Schnecke nach einem der Ansprüche 1 bis 4 und einen Zylinder (3), in dem die Schnecke (2) angeordnet ist, wobei
der Zylinder (3) eine Vielzahl von Stiften (13) umfasst, die durch die ausgeschnittenen Abschnitte (10) der Spiralschaufel (5) des Knetförderbereichs verlaufen.

6. Extruder (1) nach Anspruch 5, wobei der Zylinder (3) ferner einen Einlass (11) zum Einführen des Elastomers (G) umfasst, wobei
der Einlass (11) das Elastomer (G) einem Zuführbereich (8) zuführt, der auf einer stromaufwärtigen Seite in der Extrusionsrichtung (A) des Knetbereichs (6) angeordnet ist.

## Revendications

1. Vis (2) pour une extrudeuse du type à broches avec une lame en spirale (5) destinée à extruder un élastomère plastique tout en malaxant l'élastomère plastique (G), la vis (2) comprenant :
une région de malaxage (6) dans laquelle la lame en spirale (5) est dotée de portions de découpe (10) qui sont configurées pour faire passer des broches (13) ; et
une région de plastification (7) qui est agencée sur un côté aval dans une direction d'extrusion (A) de la région de malaxage (6),
dans laquelle
la région de plastification (7) comprend une barrière (14) s'étendant entre des portions adjacentes dans la direction d'extrusion (A) de la lame en spirale (5),
**caractérisée en ce que**
la barrière (14) a une hauteur plus petite qu'une hauteur de la lame en spirale (5) et une différence (D) entre les hauteurs est égale ou inférieure à 4 mm, et
la barrière a une épaisseur (t) égale ou supérieure à 1,5 fois la différence (D) des hauteurs.

2. Vis (2) selon la revendication 1, dans laquelle
la région de plastification (7) comprend trois à six barrières (14).

3. Vis (2) selon la revendication 1 ou 2, comprenant en outre
une région d'alimentation (8) agencée sur un côté amont dans la direction d'extrusion (A) de la région de malaxage (6), la lame en spirale (5) de la région d'alimentation (8) étant formée en un filetage unique.

4. Vis (2) selon la revendication 3, dans laquelle
la lame en spirale (5) de la région de malaxage (6) et de la région de plastification (7) est formée en un filetage double.

5. Extrudeuse (1) comprenant une vis selon l'une quelconque des revendications 1 à 4 et un fourreau (3) dans lequel la vis (2) est disposée, dans laquelle
le fourreau (3) comprend une pluralité de broches (13) qui passent à travers les portions de découpe (10) de la lame en spirale (5) de la région favorisant un malaxage.

6. Extrudeuse (1) selon la revendication 5, le fourreau (3) comprenant en outre une entrée (11) destinée à introduire l'élastomère (G), dans laquelle l'entrée (11) alimente élastomère (G) à une région d'alimentation (8) qui est située sur un côté amont dans la direction d'extrusion (A) de la région de malaxage (6).
